# EUROPÄISCHE PATENTANMELDUNG

(11) **EP 1 059 725 A2**
(43) Veröffentlichungstag der Anmeldung: **13.12.2000**
(21) Anmeldenummer: 00110752.3
(22) Anmeldetag: 19.05.2000
(51) Int. Cl.: H02P 6/00, H02P 8/00

(54) **Elektronisch kummutierbarer Motor**

(30) Priorität: 27.05.1999 DE 19924321
(71) Anmelder: ROBERT BOSCH GMBH, 70442 Stuttgart (DE)
(72) Erfinder: Retz, Martin, 76593 Gernsbach (DE); Kessler, Martin, 77815 Bühl (DE)

(57) **Zusammenfassung**

Die Erfindung betrifft einen elektronisch kommutierbaren Motor mit Halbleiter-Endstufen und Erregerwicklungen, die über eine Steuereinheit mit pulsweitenmodulierten Steuersignalen mit einer Kommutierungsfrequenz einer Kommutierungseinrichtung ansteuerbar sind. Der Aufwand an Entstörmitteln ohne wesentliche Erhöhung der Verlustleistung in den Halbleiter-Endstufen läßt sich dadurch reduzieren, dass die Kommutierungseinrichtung Kommutierungssignale mit abgeflachter Anstiegs- und Abfallfanke erzeugt, und dass die Kommutierungssignale nur im Bereich ihres konstanten Sollwertes mit getakteten PWM-Signalen zu Steuersignalen für die Halbleiter-Endstufen verknüpft werden.

## Beschreibung

Die Erfindung betrifft einen elektronisch kommutierbaren Motor mit Halbleiter-Endstufen und Erregerwicklungen, die über eine Steuereinheit mit pulsweitenmodulierten Steuersignalen mit einer Kommutierungsfrequenz einer Kommutierungseinrichtung ansteuerbar sind.

Derartige Motoren sind in verschiedenen Bauarten bekannt, die sich im wesentlichen durch die Anzahl der Halbleiter-Endstufen und Erregerwicklungen sowie in der Baugröße und damit Leistung unterscheiden. Die Erregerwicklungen werden über die Halbleiter-Endstufen mit einer Versorgungsgleichspannung im Rhythmus der zugeführten Steuersignale sequentiell verbunden und wieder von dieser getrennt. Dabei werden z.B. MOSFETs als Halbleiterschalter verwendet, die über Treiberschaltungen ausgesteuert werden. Dieser Kommutierungsvorgang läuft mit der Kommutierungsfrequenz ab. Die Kommutierungssignale sind so gewählt, dass der Ein- und Ausschaltvorgang mit der magnetischen Polgestaltung und damit dem Drehwinkel des Rotors abgestimmt ist.

Die Steuersignale für die Halbleiter-Endstufen sind durch Pulsweitenmodulation zerhackt, um den Bestromungsgrad und damit die Leistung bzw. die Drehzahl des Motors variabel zu gestalten, d.h. während des Steuersignals wird die Halbleiter-Endstufe mit der Erregerwicklung mehrfach ein- und ausgeschaltet. Damit läßt sich der Mittelwert der auf die Erregerwicklung wirkenden Spannung und damit der Strom und das Antriebsmoment des Motors verändern.

Die mittlere Verlustleistung, die im Halbleiterschalter der Halbleiter-Endstufe bei diesen Schaltvorgängen auftritt, ist proportional der Taktfrequenz der Pulsweitenmodulation und ebenfalls proportional der Zeitdauer der Kommutierungssignale, die ja in definierten Schaltzeiten auftreten.

Um die Verluste in den Halbleiter-Endstufen klein zu halten, ist man bestrebt, die Taktfrequenz der Pulsweitenmodulation und die Zeitdauer der Kommutierungssignale möglichst klein zu halten. Daraus resultieren steilflankige Spannungs- und Stromverläufe, die Oberwellen bis in den MHz-Bereich aufweisen. Diese Oberwellen machen sich bei der EMV-Prüfung des Motors störend bemerkbar, so dass oft ein beachtlicher Aufwand an Entstörmitteln erforderlich wird. Die eingesetzten Entstörfilter bestehen in der Regel aus LC-Tiefpässen, welche nicht nur kostenintensiv sind, sondern auch einen beachtlichen Platzbedarf haben.

Wird die Zeitdauer für die Kommutierungssignale erhöht und die Taktfrequenz der PWM-Modulation verkleinert, dann können weniger steile Anstiegs- und Abfallflanken mit geringerem Oberwellengehalt erreicht werden. Der Vorteil der geringen Verlustleistung in den Halbleiter-Endstufen geht dabei jedoch verloren. Die Verlustleistung und der Wirkungsgrad nähern sich einer Linearsteuerung des Motors an.

Es ist Aufgabe der Erfindung, bei einem elektronisch kommutierbaren Motor der eingangs erwähnten Art unter Beibehaltung der verlustarmen getakteten Ansteuerung der Halbleiter-Endstufen den entstehenden Oberwellenanteil und damit den EMV-Störpegel zu reduzieren.

Diese Aufgabe wird nach der Erfindung dadurch gelöst, dass die Kommutierungseinrichtung Kommutierungssignale mit abgeflachter Anstiegs- und Abfall-flanke erzeugt, und dass die Kommutierungssignale nur im Bereich ihres konstanten Sollwertes mit getakteten PWM-Signalen zu Steuersignalen für die Halbleiter-Endstufen verknüpft werden.

Diese Ansteuerung des Motors geht von der Tatsache aus, dass das entstehende Störspektrum sich in zwei Teilspektren aufteilen lässt, die sich zumindest teilweise addieren. Dies ist zum einen das durch die Kommutierung entstehende Störspektrum und zum anderen das durch getaktete Schalten der Erregerwicklungen entstehende Störspektrum.

Da gemäß der Erfindung die Schaltflanken der Kommutierungssignale abgeflacht werden und die Schaltflanken während des Taktens steil belassen werden, wird das durch die Kommutierung hervorgerufene Störspektrum reduziert. Dabei wird die Verlustleistung in den Halbleiter-Endstufen erhöht. Da die Kommutierungs-Schaltvorgänge jedoch viel seltener auftreten als die Schaltvorgänge des Taktens, fällt diese erhöhte Verlustleistung kaum ins Gewicht. Das durch das Takten entstehende Störspektrum bleibt praktisch unbeeinflusst, liegt aber im höheren Frequenzbereich, so daß es mit einfacheren, kleineren Entstörmitteln reduziert werden kann. Der Entstöraufwand kann verringert und Kosten eingespart werden.

Die erfindungsgemäße Ansteuerung wird dadurch variabel, dass der Sollwert der Kommutierungssignale vorgegeben oder vorgebbar ist oder dass die Anstiegszeit und die Abfallzeit der Anstiegs- und Abfallflanken der Kommutierungssignale vorgegeben oder vorgebbar sind.

Außerdem bietet die neue Ansteuerung dadurch weitere Variationsmöglichkeiten, dass die Anstiegszeit und die Abfallzeit der Anstiegs- und Abfallflanken der Kommutierungssignale gleich gewählt und abhängig von der Kommutierungsfrequenz der Kommutierungseinrichtung sind.

Die Ableitung der Steuersignale für die Halbleiter-Endstufen des Motors kann nach einer Ausgestaltung dadurch erfolgen, dass die getakteten PWM-Signale von einem PWM-Generator ableitbar sind und über eine Steuereinheit mit den Kommutierungssignalen der Kommutierungseinrichtung zu den Steuersignalen für die Halbleiter-Endstufen des Motors verknüpfbar sind. Dabei kann das Pulsweitenverhältnis des PWM-Generators konstant und einem Nennbetrieb des Motors zugeordnet sein. Die Ansteuerung kann jedoch auch so abgewandelt sein, dass das Pulsweitenverhältnis des PWM-Generators in Abhängigkeit von einem vorgegebenen oder vorgebbaren Sollwert veränderbar und zur Steuerung der Leistung bzw. Drehzahl des Motors verwendbawr ist.

Ist bei der Ansteuerung vorgesehen, dass das Steuersignal für die Halbleiter-Endstufen des Motors im getakteten Bereich stets die volle Durchsteuerung der Halbleiter-Endstufen bewirkt, dann wird die Verlustleistung in den Halbleiterschaltern der Halbleiter-Endstufe besonders klein gehalten.

Die Anpassung der Ansteuerung an unterschiedliche Motoren lässt sich dadurch vornehmen, dass die Kommutierungseinrichtung und die Steuereinheit an die durch die Anzahl der Halbleiter-Endstufen und Erregerwicklungen gegebene Bauart des Motors angepaßt sind.

Die Erfindung wird anhand eines in der Zeichnung dargestellten Ausführungsbeispieles erläutert. Es zeigen:
- Fig. 1: ein vereinfachtes Blockschaltbild eines elektrisch kommutierbaren Motors,
- Fig. 2a: den zeitlichen Verlauf eines Kommutierungssignals,
- Fig. 2b: das bei der Verknüpfung wirksame PWM-Signal und
- Fig. 2c: das verknüpfte Steuersignal für die Halbleiter-Endstufe.

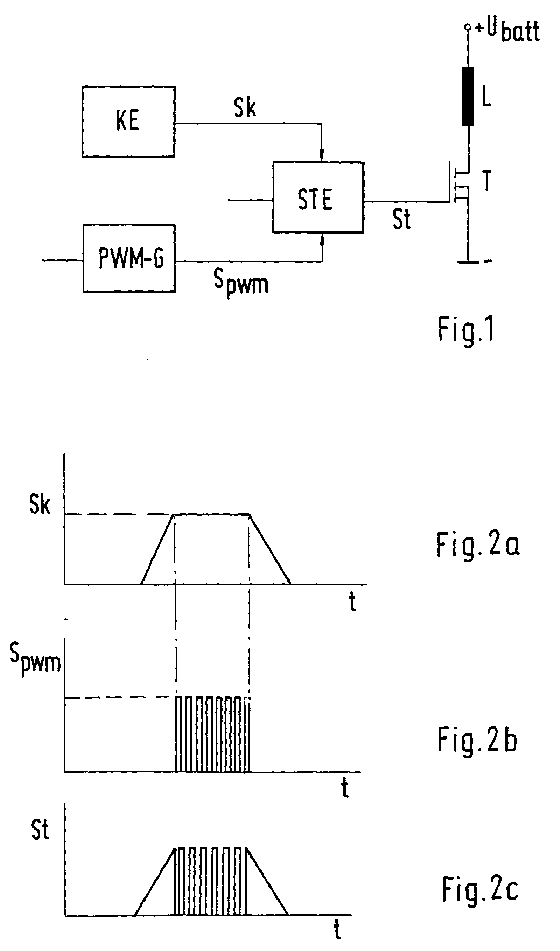

Wie das Blockschaltbild nach Fig. 1 zeigt, umfaßt die Ansteuerung des Motors mit seinen Erregerwicklungen L eine Kommutierungseinrichtung KE, einen PWM-Generator PWM-G und eine Steuereinheit STE, die Steuersignale an die Halbleiter-Endstufen T abgibt, welche die Erregerwicklungen L an die Versorgungsgleichspannung U_{batt} anschalten und wieder von dieser abschalten. Die Steuereinheit STE ist auf die Anzahl der Halbleiter-Endstufen T und Erregerwicklungen L des Motors, d.h. auf dessen Bauart, abgestimmt, wobei die Halbleiter-Endstufen T direkt oder über Treiberschalungen sequentiell im Rhythmus der Kommutierungsfrequenz ansteuerbar sind.

Der Steuereinheit STE werden Kommutierungssignale und PWM-Signale zugeführt, die in der Steuereinheit STE verknüpft werden. Dabei lassen sich die Kommutierungssignale in der Kommutierungseinheit KE in Bezug auf Zeitdauer und Ausgestaltung der Anstiegs- und Abfallflanken variieren und an die Betriebsbedingungen anpassen. Auch die von dem PWM-Generator PWM-G abgegeben PWM-Signale lassen sich in der Pulsweite konstant halten oder verändem. Außerdem kann auch die Taktfrequenz der PWM-Signale geändert werden, ohne das Grundprinzip der Erfindung zu verlassen.

Dem Kommutierungssignal Sk der Kommutierungseinheit KE wird nun ein zeitlicher Verlauf nach Fig. 2a gegeben. Die Anstiegs- und Abfallflanken des Kommutierungssignals Sk ist abgeflacht, um ein dadurch bedingtes Störspektrum klein zu halten. Dabei wird bewußt eine erhöhte Verlustleistung in den Halbleiter-Endstufen T in Kauf genommen. Da diese Schaltflanken viel seltener auftreten als die Schaltflanken bei getaktetem Betrieb, sind diese erhöhten Verluste zu vernachlässigen. Das durch die Kommutierung entstehende niederfrequentere Störspektrum benötigt keinen teuren Aufwand an Entstörmitteln mehr.

Wie Fig. 2b zeigt, wird die Taktung der Steuersignale St für die Halbleiter-Endstufen T auf den konstanten Sollwert der Kommutierungssignale Sk beschränkt, wobei die Verknüpfung des Kommutierungssignals Sk mit dem PWM-Signal S_{pwm} zu dem Steuersignal St nach Fig. 2c im Steuergerät STE erfolgen kann. Der PWM-Generator PWM-G kann daher auch durchgehend ein getaktetes, im Pulsweitenverhältnis fest vorgegebenes oder variables Ausgangssignal an die Steuereinheit STE abgeben. Kommutierungseinrichtung KE, PWM-Generator PWM-G und Steuereinheit STE bilden eine Motorsteuerung mit allen Funktionen.

Bei der neuen Ansteuerung des Motors bleiben alle Variationsmöglichkeiten der Beeinflussung von Kommutierungsfrequen, Kommutierungssignal Sk, Taktfrequenz und Pulsweitenverhältnis des PWM-Generators PWM-G und Vorgabe von anderen Parametern erhalten.

## Patentansprüche

1. Elektronisch kommutierbarer Motor mit Halbleiter-Endstufen und Erregerwicklungen, die über eine Steuereinheit mit pulsweitenmodulierten Steuersignalen mit einer Kommutierungsfrequenz einer Kommutierungseinrichtung ansteuerbar sind,
dadurch gekennzeichnet,
dass die Kommutierungseinrichtung (KE) Kommutierungssignale (Sk) mit abgeflachter Anstiegs- und Abfallfanke erzeugt, und
dass die Kommutierungssignale (Sk) nur im Bereich ihres konstanten Sollwertes mit getakteten PWM-Signalen (S_{pwm}) zu Steuersignalen (St) für die Halbleiter-Endstufen (T) verknüpft werden.

2. Elektronisch kommutierbarer Motor nach Anspruch 1,
dadurch gekennzeichnet,
dass der Sollwert der Kommutierungssignale (Sk) vorgegeben oder vorgebbar ist.

3. Elektronisch kommutierbarer Motor nach Anspruch 1 oder 2,
dadurch gekennzeichnet,
dass die Anstiegszeit und die Abfallzeit der Anstiegs- und Abfallflanken der Kommutierungssignale (Sk) vorgegeben oder vorgebbar sind.

4. Elektronisch kommutierbarer Motor nach Anspruch 3,
dadurch gekennzeichnet,
dass die Anstiegszeit und die Abfallzeit der Anstiegs- und Abfallflanken der Kommutierungssignale (Sk) gleich gewählt und abhängig von der Kommutierungsfrequenz der Kommutierungseinrichtung (KE) sind.

5. Elektronisch kommutierbarer Motor nach einem der Ansprüche 1 bis 4, dadurch gekennzeichnet,
dass die getakteten PWM-Signale (S_{pwm}) von einem PWM-Generator (PWM-G) ableitbar sind und über eine Steuereinheit (STE) mit den Kommutierungssignalen (Sk) der Kommutierungseinrichtung (KE) zu den Steuersignalen (St) für die Halbleiter-Endstufen (T) des Motors verknüpfbar sind.

6. Elektonisch kommutierbarer Motor nach Anspruch 5,
dadurch gekennzeichnet,
dass das Pulsweitenverhältnis (PWV) des PWM-Generator (PWM-G) konstant ist und einem Nennbetrieb des Motors zugeordnet ist.

7. Elektronisch kommutierbarer Motor nach Anspruch 5,
dadurch gekennzeichnet,
dass das Pulsweitenverhältnis (PWV) des PWM-Generators (PWM-G) in Abhängigkeit von einem vorgegebenen oder vorgebbaren Sollwert veränderbar und zur Steuerung der Leistung bzw. Drehzahl des Motors verwendbar ist.

8. Elektronisch kommutierbarer Motor nach einem der Ansprüche 1 bis 7, dadurch gekennzeichnet,
dass das Steuersignal (St) für die Halbleiter-Endstufen (T) des Motors im getakteten Bereich stets die volle Durchsteuerung der Halbleiter-Endstufen (T) bewirkt.

9. Elektronisch kommutierbarer Motor nach einem der Ansprüche 1 bis 8, dadurch gekennzeichnet,
dass die Kommutierungseinrichtung (KE) und die Steuereinheit (STE) an die durch die Anzahl der Halbleiter-Endstufen (T) und Erregerwicklungen (L) gegebene Bauart des Motors angepaßt sind.
